# EUROPEAN PATENT APPLICATION

(11) **EP 4 032 697 A1**
(43) Date of publication of application: **27.07.2022**
(21) Application number: 22151807.9
(22) Date of filing: 17.01.2022
(51) Int. Cl.: B32B 7/12, B32B 27/18, B32B 27/32, B32B 38/00, C08K 5/13, C08K 5/17, C08L 23/00, B65D 65/40, B65D 85/00

(54) **IRRADIATION STERILISABLE PACKAGING MATERIAL AND STABILIZED POLYOLEFIN FILM FOR USE THEREIN**

(30) Priority: 22.01.2021 EP 21153121; 16.03.2021 EP 21162924
(71) Applicant: Tetra Laval Holdings & Finance S.A., 1009 Pully (CH)
(72) Inventor: Camacho, Walker, 127 61 Skärholmen (SE); Albe, Lisa, 75433 Maulbronn (DE); Karlberg, Maria, 247 56 Dalby (SE)
(74) Representative: Tetra Pak - Patent Attorneys SE

(57) **Abstract**

The present disclosure relates to a low-voltage electron-beam sterilizable polyolefin film of a polyolefin composition, for use in laminated packaging materials for liquid food products, the polyolefin composition comprising one or more polyolefins, characterized in that the polyolefin composition further comprises an antioxidant formulation comprising an N,N-dialkyl-hydroxylamine and a sterically hindered phenolic compound. The disclosure also relates to a low-voltage electron-beam sterilizable laminated packaging material for liquid food products comprising the low-voltage electron-beam sterilizable polyolefin film, to a packaging container for liquid food products comprising the low-voltage electron-beam sterilizable laminated packaging material and to a use of the low-voltage electron-beam resistant laminated packaging material in a method of forming, filling and sealing packaging containers for liquid food products.

## Description

### Technical Field

The present disclosure relates to a low-voltage electron-beam sterilizable polyolefin film of a polyolefin composition, for use in laminated packaging materials for liquid food products. The disclosure also relates to a laminated packaging material such a film, in particular intended for liquid food packaging. Furthermore, the disclosure relates to a packaging container comprising the laminated packaging material or being made of the laminated packaging material. The disclosure also relates to the use of such a laminated packaging material in method of forming, filling and sealing packaging containers for liquid food products.

### Background

Packaging containers of the single use disposable type for liquid foods are often produced from a packaging laminate based on paperboard or carton. One such commonly occurring packaging container is marketed under the trademark Tetra Brik Aseptic^{®} and is principally employed for aseptic packaging of liquid foods such as milk, fruit juices etc., sold for long term ambient storage. The packaging material in this known packaging container is typically a laminate comprising a bulk, or core layer, of paper, paperboard or other cellulose-based material, and outer, liquid-tight layers of thermoplastics. In order to render the packaging container gas-tight, in particular oxygen gas-tight, for example for the purpose of aseptic packaging and packaging of milk or fruit juice, the laminate in these packaging containers normally comprises at least one additional layer, most commonly an aluminium foil.

On the inside of the laminate, i.e. the side intended to face the filled food contents of a container produced from the laminate, there is an innermost layer, applied onto the aluminium foil, which innermost, inside layer may be composed of one or several part layers, comprising heat sealable thermoplastic polymers, such as adhesive polymers and/or polyolefins. Also on the outside of the bulk layer, there is an outermost heat sealable polymer layer.

The packaging containers are generally produced by means of high-speed packaging machines of the type that form, fill and seal packages from a web or from prefabricated blanks of packaging material. Packaging containers may thus be produced by reforming a web of the laminated packaging material into a tube by both of the longitudinal edges of the web being united to each other in an overlap joint by welding together the inner- and outermost heat sealable thermoplastic polymer layers. The tube is filled with the intended liquid food product and is thereafter divided into individual packages by repeated transversal seals of the tube at a predetermined distance from each other below the level of the contents in the tube. The packages are separated from the tube by incisions along the transversal seals and are given the desired geometric configuration, normally parallelepipedic, by fold formation along prepared crease lines in the packaging material.

The main advantage of this continuous tube-forming, filling and sealing packaging method concept is that the web may be sterilised continuously just before tube-forming, thus providing for the possibility of an aseptic packaging method, i.e. a method wherein the liquid content to be filled as well as the packaging material itself are reduced from bacteria and the filled packaging container is produced under clean conditions such that the filled package may be stored for a long time even at ambient temperature, without the risk of growth of micro-organisms in the filled product. Another important advantage of the Tetra Brik Aseptic^{®}-type packaging method is, as stated above, the possibility of continuous high-speed packaging, which has considerable impact on cost efficiency.

Packaging containers for sensitive liquid food, for example milk or juice, can also be produced from sheet-like blanks or prefabricated blanks of the laminated packaging material. From a tubular blank of the packaging laminate that is folded flat, packages are produced by first of all building the blank up to form an open tubular container capsule, of which one open end is closed off by means of folding and heat-sealing of integral end panels. The thus closed container capsule is filled with the food product in question, e.g. juice, through its open end, which is thereafter closed off by means of further folding and heat-sealing of corresponding integral end panels. An example of a packaging container produced from sheet-like and tubular blanks is the conventional so-called gable-top package. There are also packages of this type which have a moulded top and/or screw cap made of plastic.

A layer of an aluminium foil in the packaging laminate provides gas barrier properties quite superior to most polymeric gas barrier materials. The conventional aluminium-foil based packaging laminate for liquid food aseptic packaging is still the most cost-efficient packaging material, at its level of performance, available on the market today.

Any other material to compete with the aluminium-foil-based materials must be cost-efficient regarding raw materials, have comparable food preserving properties and have a comparably low complexity in the converting into a finished packaging laminate.

Among the efforts of developing non-aluminium-foil materials for liquid food carton packaging, there is also a general incentive towards developing pre-manufactured films or sheets having high and multiple barrier functionalities, i.e. not only oxygen and gas barrier but also water vapour-, chemical- or aroma-substance-barrier properties.

One particular type of such an alternative, "non-alu-foil" barrier material is a barrier film made by vapour deposition coating onto a polymer film, such as a polyolefin film, as a substrate (see e.g. WO1995006556A1, US5153074, WO2016068836A1 and US8048532B2). The vapour deposited barrier coating may function quite well as barrier material, although being very thin, i.e. in the nanometer range. The polyolefin production process requires good melt processing stabilization. This is accomplished by the addition of phosphite-based antioxidants, often in combination with phenolic antioxidants. One problem associated with the use of such traditional polyolefin mixtures is that, when a packaging material, comprising such a barrier material, is subjected to so called e-beam sterilization, breakdown products may be produced from the antioxidants in the polyolefin film. These breakdown products can later migrate through the material and eventually contaminate the enclosed food product. In order for the packaging to be safe for the intended purpose of packing food, the type and level of any migrating breakdown products must be safety assessed in accordance with internationally recognised scientific principles on risk assessment. Thus, there is a need to overcome these problems.

### Objects

It is, accordingly, an object of the present disclosure to provide a low-voltage electron-beam sterilizable polyolefin film for laminating into packaging materials.

It is a further general object of the disclosure to provide laminated packaging materials for liquid, semi-solid or wet food products.

A particular object, is to provide a, relative to aluminium foil barrier materials, cost-efficient, non-foil, paper- or paperboard-based, laminated packaging material, having good gas, particularly oxygen, and/or water vapour barrier properties, as well as mechanical durability and compatibility with low voltage electron-beam sterilization processes, for the purpose of manufacturing packages for long-term, aseptic food storage.

These objects are thus attainable according to the present disclosure by the low-voltage electron-beam sterilizable polyolefin film, the laminated packaging material, the packaging container and the use of the low-voltage electron-beam resistant laminated packaging material in a method of manufacturing the packaging material, as defined in the appended claims.

### Summary

According to a first aspect, the above and other objects are achieved, in full or at least in part by a composition as defined by claim 1. According to this claim, the above object is achieved by a low-voltage electron-beam sterilizable polyolefin film of a polyolefin composition, for use in laminated packaging materials for liquid food products, the polyolefin composition comprising one or more polyolefins, wherein the polyolefin composition further comprises an antioxidant formulation comprising of an N,N-dialkyl-hydroxylamine and a sterically hindered phenolic compound. When exposed to electron-beam sterilization, no, or insignificant amounts of, breakdown products are formed and thus the risk of contaminating an enclosed food product with such substances is markedly reduced. Further, the combination of a N,N-dialkylhydroxylamine and a sterically hindered phenolic compound implies that the need for phosphite-based stabilizers may be dispensed with, as the composition is sufficiently stabilized for melt processing.

The antioxidant formulation may comprise one, two or more different N,N-dialkyl-hydroxylamines.

The antioxidant formulation may comprise one, two or more different sterically hindered phenolic compounds.

According to one embodiment, the amount of the N,N-dialkylhydroxylamine is from 100 to 1000 ppm, such as 150 to 900 ppm, preferably 200 to 800 ppm, such as from 250 to 700 ppm, such as from 300 to 600 ppm, such as from 350 to 500 ppm of the total polyolefin composition.

According to a second embodiment, the N,N-dialkyl-hydroxylamine has the formula R¹R²NOH, wherein R¹ is a C₆-C₅₀ alkyl, such as a C₈-C₄₀ alkyl, such as a C₁₀-C₃₀ alkyl, such as a C₁₂-C₂₆ alkyl, such as a C₁₄-C₂₄ alkyl, preferably a C₁₆-C₂₂ alkyl, such as an C₁₈-C₂₀ alkyl, and R² is a C₆-C₅₀ alkyl, such as a C₈-C₄₀ alkyl, such as a C₁₀-C₃₀ alkyl, such as a C12-C26 alkyl, such as a C₁₄-C₂₄ alkyl, preferably a C₁₆-C₂₂ alkyl, such as an C₁₈-C₂₀ alkyl. R¹ and R² may be the same or different. Preferably, R¹ and R² are independently chosen from C₁₂-alkyl, C₁₄-alkyl, C₁₆-alkyl and C₁₈-alkyl.

According to a further embodiment, the N,N-dialkyl-hydroxylamine is chosen from the group consisting of N,N-dodecylhydroxylamine, N,N-ditetradecylhydroxylamine, N,N-dihexadecylhydroxylamine, N,N-dioctadecylhydroxylamine, N-hexadecyl-N-octadecylhydroxylamine, N-heptadecyl-N-octadecylhydroxylamine, and derivatives thereof, and mixtures thereof, preferably wherein the N,N-dialkyl-hydroxylamine is N,N-dihexadecylhydroxylamine, N,N-dioctadecylhydroxylamine or N-hexadecyl-N-octadecylhydroxylamine.

N,N-dodecylhydroxylamine is also known as N,N-dilauryl-hydroxylamine.

Thus, antioxidant formulation may comprise N,N-dihexadecylhydroxylamine and N,N-dioctadecylhydroxylamine.

IRGASTAB FS 042 (CAS-number 143925-92-2), a commercially available antioxidant within the scope of this disclosure, comprises N,N-dioctadecylhydroxylamine, also known as bis(octadecyl)hydroxylamine. Another synonym to IRGASTAB FS 042 is oxidized bis(hydrogenated tallow alkyl)amines.

According to another embodiment, the amount of the sterically hindered phenolic compound is from 10 to 500 ppm, such as 50 to 400 ppm, preferably 100 to 300 ppm, such as 150 to 200 ppm.

According to yet another embodiment, the sterically hindered phenolic compound is selected from the group consisting of 2,6-di-tert-butyl-4-methylphenol, 2-tert-butyl-4,6-dimethylphenol, 2,6-di-tert-butyl-4-ethylphenol, 2,6-di-tert-butyl-4-n-butylphenol, 2,6-di-tert-butyl-4isobutylphenol, 2,6-dicyclopentyl-4-methylphenol, 2-(alpha-methylcyclohexyl)-4,6-dimethylphenol, 2,6-di-octadecyl-4-methylphenol, 2,4,6,-tricyclohexyphenol, 2,6-di-tert-butyl- 4-methoxymethylphenol, pentaerythritol tetrakis(3-(3,5-di-tert-butyl-4-hydroxyphenyl)propionate, octadecyl-3-(3,5-di-tert-butyl-4-hydroxyphenyl)propionate, 1,3,5-trimethyl-2,4,6-tris(3,5-di-tert-butyl-4-hydroxybenzyl)benzene, and derivatives thereof, and mixtures thereof.

Preferably, the sterically hindered phenolic compound is pentaerythritol tetrakis(3-(3,5-di-tert-butyl-4-hydroxyphenyl)propionate, octadecyl-3-(3,5-di-tert-butyl-4-hydroxyphenyl)propionate, 1,3,5-trimethyl-2,4,6-tris(3,5-di-tert-butyl-4-hydroxybenzyl)benzene, or a mixture thereof.

1,3,5-trimethyl-2,4,6-tris(3,5-di-tert-butyl-4-hydroxybenzyl)benzene is also known as 3,3',3",5,5',5"-hexa-tert-butyl-.alpha,.alpha',.alpha"-(mesitylene-2,4,6-triyl) tri-p-cresol.

IRGANOX 1010 (CAS-number 6683-19-8) a commercially available antioxidant within the scope of this disclosure, comprises pentaerythritol tetrakis(3-(3,5-di-tert-butyl-4-hydroxyphenyl)propionate.

IRGANOX 1076 (CAS-number 2082-79-3), a commercially available antioxidant within the scope of this disclosure, comprises octadecyl 3-(3,5-di-tert-butyl-4-hydroxyphenyl)propionate.

IRGANOX 1330 (CAS-number 1709-70-2), a commercially available antioxidant within the scope of this disclosure, comprises 1,3,5-trimethyl-2,4,6-tris(3,5-di-tert-butyl-4-hydroxybenzyl)benzene.

One example of an antioxidant formulation according to the present disclosure comprises N,N-dioctadecylhydroxylamine and pentaerythritol tetrakis(3-(3,5-di-tert-butyl-4-hydroxyphenyl)propionate.

Another example of an antioxidant formulation according to the present disclosure comprises N,N-dioctadecylhydroxylamine, pentaerythritol tetrakis(3-(3,5-di-tert-butyl-4-hydroxyphenyl)propionate and octadecyl 3-(3,5-di-tert-butyl-4-hydroxyphenyl)propionate.

A further example of an antioxidant formulation according to the present disclosure comprises N,N-dioctadecylhydroxylamine and 1,3,5-trimethyl-2,4,6-tris(3,5-di-tert-butyl-4-hydroxybenzyl)benzene.

Another example of an antioxidant formulation according to the present disclosure comprises N,N-dioctadecylhydroxylamine, 1,3,5-trimethyl-2,4,6-tris-(3,5-di-tert-butyl-4-hydroxybenzyl)benzene and octadecyl 3-(3,5-di-tert-butyl-4-hydroxyphenyl)propionate.

According to a further embodiment, the weight ratio of N,N-hydroxylamine to sterically hindered phenolic compound is from 20:80 to 80:20, such as from 25:75 to 75:25, such as from 30:70 to 70:30, such as from 35:65 to 65:35, such as from 40:60 to 60:40, such as from 45:55 to 55:45, such as from 50:50; preferably from 60:40 to 70:30.

According to yet another embodiment, the antioxidant formulation comprises at least two N,N-dialkyl-hydroxylamine and/or at least two sterically hindered phenolic compounds.

According to a further embodiment, the polyolefin composition comprises one or more polyolefins selected from the group consisting of polypropylene homo-, co- and terpolymers, such as mono-oriented polypropylene (OPP) or biaxially-oriented polypropylene (BOPP); high density polyethylene homo- and copolymers, such as mono-oriented high density polyethylene (OHDPE) and biaxially oriented high density polyethylene (BOHDPE); medium density polyethylene homo- and copolymers, such as oriented medium density polyethylene (OMDPE); low density polyethylene homo- and copolymers; and linear low-density polyethylenes (LLDPEs); such as Ziegler-Natta catalysed linear low-density polyethylenes (ZN-LLDPE) or metallocene-catalysed linear low-density polyethylenes (m-LLDPE), or mixtures of any of said polyolefins.

Preferably, the polyolefin composition comprises one or more polyolefins selected from the group consisting of polypropylene homo-, co- and terpolymers, such as mono-oriented polypropylene (OPP) or biaxially-oriented polypropylene (BOPP); high density polyethylene homo- and copolymers, such as mono-oriented high density polyethylene (OHDPE) and biaxially oriented high density polyethylene (BOHDPE); medium density polyethylene homo- and copolymers, such as oriented medium density polyethylene (OMDPE); and linear low-density polyethylenes (LLDPEs); such as Ziegler-Natta catalysed linear low-density polyethylenes (ZN-LLDPE) or metallocene-catalysed linear low-density polyethylenes (m-LLDPE), or mixtures of any of said polyolefins.

Preferably wherein the polyolefin is selected from the group comsisting of oriented polypropylene (OPP), biaxially-oriented polypropylene (BOPP), polypropylene homo-, co- and terpolymers, such as mono-oriented polypropylene (OPP) or biaxially-oriented polypropylene (BOPP); high density polyethylene homo- and copolymers, such as mono-oriented high density polyethylene (OHDPE) and biaxially oriented high density polyethylene (BOHDPE), or mixtures of any thereof.

Preferably wherein the polyolefin is oriented polypropylene (OPP) or biaxially-oriented polypropylene (BOPP).

According to one embodiment, the thickness of the polyolefin film is 10 to 40 µm, such as 11 to 30 µm, such as 12 to 25 µm, such as 13 to18 µm, preferably 14 to 16 µm.

In addition to the antioxidant formulation, other additives for other purposes in small amounts may be present in the polyolefin composition, such as antiblocking agents, antistatic agents, catalyst neutralizers, processing aids etc. Such additives are known in the art of film manufacturing and will not be elaborated on further here.

According to another embodiment, the low-voltage electron-beam sterilizable polyolefin film further has a vapour-deposited barrier coating on at least one side of the film.

The barrier coating may act as a barrier against gas, particularly against oxygen, but also against water vapour.

In some examples, the barrier acts as a water vapour barrier.

Generally, the vapour deposition coating of a barrier layer onto a polymer substrate film, is carried out by means of a method of physical or chemical vapour deposition. Various coatings of ceramic or metal composition may be applied by this type of methods.

The vapour-deposited barrier coating may be applied by a method selected from the group comprising physical vapour deposition (PVD), chemical vapour deposition (CVD) and plasma enhanced chemical vapour deposition (PECVD).

According to yet another embodiment, the vapour-deposited barrier coating is a gas barrier coating selected from the group consisting of a metallized coating, metal oxide, inorganic oxide and diamond-like carbon coatings.

Preferably, the thickness of the vapour-deposited barrier coating is from 5 to 500 nm, such as from 5 to 100 nm, such as from 5 to 50 nm. More preferably, the layer is 20 to 50 nm thick, such as 25 to 40 nm, such as 30 to 35 nm, most preferably about 30 nm.

More preferably, the thickness of such vapour deposited coatings varies between 5 and 200 nm. Below 5 nm the barrier properties may be too low to be useful and above 200 nm, the coating is less flexible and, thus, more prone to cracking when applied onto a flexible substrate.

The vapour-deposited barrier coating may comprise a silicon oxide, an aluminium oxide and/or metallic aluminium as a continuous layer. Preferably, the layer is 20 to 50 nm thick, such as 25 to 40 nm, such as 30 to 35 nm, more preferably about 30 nm.

Preferably, the silicon dioxide is SiO,SiO₂ and/or SiOxCy, where in x is from 1.5 to 2.2 and y is from 0 (i.e. C Is absent) to 0.8.

Preferably, the aluminium oxide is Al₂O₃.

In most applications, the metallic aluminium coating is a continuous coating.

Silicon oxide coatings may also be referred to as SiOx coatings.

Aluminium oxide coatings may also be referred to as AlOx coatings.

A metallized coating , e.g. by metallic aluminium, may also be referred to as metallization coating.

Preferably, the metallized layer has an optical density (OD) of from 2.0 to 3.0, preferably from 2.2 to 2.9. At an optical density lower than 2.0, the barrier properties of the metallized film are very low. At above 3.0, on the other hand, the metallization layer becomes too brittle, and the thermostability during the metallization process will be too low due to higher heat load when metallizing the substrate film during a longer time. The coating quality and adhesion will then be clearly negatively affected. An optimum has, thus, been found between these values, preferably between 2.2 and 2.9.

Vapour deposition processes are mostly carried out under vacuum conditions for better quality coatings, but e.g. atmospheric plasma coating processes may also provide rather good barrier coatings.

According to a further embodiment, the low-voltage electron-beam sterilizable polyolefin film further has a layer of ethylene vinyl alcohol on at least one side of the film.

Preferably, the thickness of the layer of ethylene vinyl alcohol is 0.5 to 3 µm, such as 0.7 to 2.7 µm, preferably 0.9 to 2.5 µm, such as 1 to 2 µm.

In certain applications, the thickness of the layer of ethylene vinyl alcohol is from 0.4 to 1.8 µm, such as 0.6 to 1.6 µm, such as 0.8 to 1.4 µm, such as 1 to 1.2 µm.

During electron-beam-treatment, phosphite-based antioxidants give rise to breakdown products. When used to package food these breakdown products may give rise to levels in the food which are too high to be safety assessed in accordance with internationally recognised scientific principles on risk assessment. Thus, by avoiding such compounds in the low-voltage electron-beam sterilizable polyolefin film, the amount of breakdown products formed is reduced and thereby also the risk of too-high levels of the breakdown products in the enclosed food product.

According to another embodiment, the low-voltage electron-beam sterilizable polyolefin film comprises zeolite in an amount of less than 10 ppm, preferably less than 5 ppm, even more preferred less than 1 ppm, such as less than 0.1 ppm; phosphite-based antioxidant in an amount of less than 100 ppm, preferably less than 50 ppm, even more preferred less than 10 ppm, such as less than 5 ppm, such as less than 1 ppm; and hindered amine light stabilizer in an amount of less than 10 ppm, preferably less than 5 ppm, even more preferred less than 1 ppm.

In a second aspect, there is provided a low-voltage electron-beam sterilizable laminated packaging material for liquid food products comprising a first outermost liquid-tight, heat sealable polyolefin layer; an interior film; and a second innermost liquid-tight, heat sealable polyolefin layer; wherein the interior film is arranged between said first outermost liquid-tight, heat sealable polyolefin layer and said a second innermost liquid-tight, heat sealable polyolefin layer; and characterized in that the first outermost liquid-tight, heat sealable polyolefin layer is a low-voltage electron-beam sterilisable polyolefin film according to the present disclosure and/or the second innermost liquid-tight, heat sealable polyolefin layer is a low-voltage electron-beam sterilisable polyolefin film according to the present disclosure, and/or the interior film is a low-voltage electron-beam sterilisable polyolefin film to the present disclosure.

In one example, the first outermost liquid-tight, heat sealable polyolefin layer is a low-voltage electron-beam sterilisable polyolefin film according to the present disclosure. This is especially advantageous, since when the packaging material is a roll-fed material, the first outermost liquid-tight, heat sealable polyolefin layer is in contact with the second innermost liquid-tight, heat sealable polyolefin layer and components may migrate from the outermost layer to the innermost layer. Furthermore, in certain packages, the outermost layer can come into contact with the package food in the area of an overlapping sealing joint.

In a second example, the second innermost liquid-tight, heat sealable polyolefin layer is a low-voltage electron-beam sterilisable polyolefin film according to the present disclosure. Preferably, the second innermost liquid-tight, heat sealable polyolefin layer is made of, or substantially made of an LLDPE.

In a third example, the interior film is a low-voltage electron-beam sterilisable polyolefin film to the present disclosure.

In another example, both the first outermost liquid-tight, heat sealable polyolefin layer and the second innermost liquid-tight, heat sealable polyolefin layer are low-voltage electron-beam sterilisable polyolefin films according to the present disclosure.

In yet another example, both the first outermost liquid-tight, heat sealable polyolefin layer and the interior film are low-voltage electron-beam sterilisable polyolefin films according to the present disclosure.

In a further embodiment, both the interior film and the second innermost liquid-tight, heat sealable polyolefin layer are low-voltage electron-beam sterilisable polyolefin films according to the present disclosure.

In yet another example, the first outermost liquid-tight, heat sealable polyolefin layer; the interior film; and the second innermost liquid-tight, heat sealable polyolefin layer are low-voltage electron-beam sterilisable polyolefin films according to the present disclosure.

According to one embodiment, the interior film is a low-voltage electron-beam sterilisable polyolefin film according to the present disclosure.

According to another embodiment, the low-voltage electron-beam sterilizable laminated packaging material further comprises a bulk layer of paper or paperboard or other cellulose-based material, arranged between the first outermost liquid-tight, heat sealable polyolefin layer, and said interior film, and optionally further comprising a decor film arranged between the first outermost liquid-tight, heat sealable polyolefin layer and the bulk layer of paper or paperboard or other cellulose-based material.

The decor film may be a low-voltage electron-beam sterilisable polyolefin film according to the present disclosure.

According to a further embodiment, the interior film is bonded to the bulk layer by an interjacent polymer or adhesive bonding layer.

Preferably, the interjacent polymer or adhesive bonding layer is a layer of low density polyethylene (LDPE). The thickness of this layer may be 10 to 40 µm, such as 15 to 30 µm, such as 20 to 25 µm.

The low-voltage electron-beam sterilizable polyolefin film may have a gas barrier coating applied to one side of the polyolefin film, and wherein said gas barrier coating being bonded to and directed towards the second innermost liquid-tight, heat sealable polyolefin layer. Optionally, the low-voltage electron-beam sterilizable polyolefin film may be bonded to the bulk layer by an interjacent polymer or adhesive bonding layer as described above.

The barrier coating may act as a barrier against gas, particularly against oxygen, but also against water vapour.

In some examples, the barrier acts as a water vapour barrier, especially when a gas barrier is present in another layer of the packaging material.

In one example, the low-voltage electron-beam sterilizable polyolefin film has a gas barrier coating applied to one side of the polyolefin film, and wherein said gas barrier coating is directed towards the first outermost liquid-tight, heat sealable polyolefin layer. Optionally, the low-voltage electron-beam sterilizable polyolefin film is bonded to the bulk layer by an interjacent polymer or adhesive bonding layer as described above.

In another example, the low-voltage electron-beam sterilizable polyolefin film has a gas barrier coating applied to one side of the polyolefin film, and wherein said gas barrier coating is directed towards the bulk layer of paper or paperboard, optionally bonded to the bulk layer by an interjacent polymer or adhesive bonding layer as described above.

In a third aspect, there is provided a packaging container for liquid food products comprising the low-voltage electron-beam sterilizable laminated packaging material of the present disclosure.

In a fourth aspect, there is provided the use of the low-voltage electron-beam resistant laminated packaging material according to the present disclosure in a method of forming, filling and sealing packaging containers for liquid food products in a filling machine, comprising the step of sterilizing at least the inside surface of the laminated packaging material by exposing it to low-voltage electron-beam irradiation.

Other objectives, features and advantages of the present disclosure will appear from the following detailed description, from the experiments, as well as from the attached claims. It is noted that the disclosure relates to all possible combination of features.

Generally, all terms used in the claims are to be interpreted according to their ordinary meaning in the technical field, unless explicitly defined otherwise herein. All references to "a/an/the [component, means, step, etc.]" are to be interpreted openly as referring to at least one instance of said component, means, step, etc., unless explicitly stated otherwise. The steps of any method disclosed herein do not have to be performed in the exact order disclosed, unless explicitly stated.

As used herein, the term "comprising" and variations of that term are not intended to exclude other additives, components, integers or steps.

### Brief Description of the Drawing

In the following, preferred embodiments of the disclosure will be described with reference to the drawing, in which:
Fig. 1 shows a schematic, cross-sectional view of a laminated packaging material according to the disclosure, comprising the low-voltage electron-beam sterilizable polyolefin film according to the present disclosure.
Fig. 2 shows the principle of how one type of packaging containers for liquid carton packaging are manufactured from the laminated packaging material in a continuous, roll-fed, form, fill and seal process.

### Detailed Description

Herein, the term "sterically hindered phenol" refers to a compound comprising a 4-hydroxy-3,5-di-*tert*-butyl-phenyl moiety,

It is to be understood that any thicknesses given for various layers of any multilayer structure are the thicknesses obtained after stretching for orientation of the intermediate, laminated, multilayer film.

With the term "long-term storage", used in connection with the present disclosure, is meant that the packaging container should be able to preserve the qualities of the packed food product, i.e. nutritional value, hygienic safety and taste, at ambient conditions for at least 1 or 2 months, such as at least 3 months, preferably longer, such as 6 months, such as 12 months, or more.

With the term "package integrity", is generally meant the package tightness, i.e. the resistance to leakage or breakage of a packaging container. In particular, it encompasses the resistance of the package to intrusion of microbes, such as bacteria, dirt, and other substances, that may deteriorate the filled food product and shorten the expected shelf-life of the package.

One main contribution to the integrity of a package from a laminated packaging material is provided by good internal adhesion between adjacent layers of the laminated material. Another contribution comes from the material resistance to defects, such as pinholes, ruptures and the like within each material layer itself, and yet another contribution comes from the strength of the sealing joints, by which the material is sealed together at the formation of a packaging container. Regarding the laminated packaging material itself, the integrity property is thus mainly focused on the adhesion of the respective laminate layers to its adjacent layers, as well as the quality of the individual material layers. Regarding the sealing of the packages, the integrity is mainly focused on the quality of the sealing joints, which is ensured by well-functioning and robust sealing operations in the filling machines, which in turn is ensured by adequately adapted heat-sealing properties of the laminated packaging material.

The term "liquid or semi-liquid food" generally refers to food products having a flowing content that optionally may contain pieces of food. Dairy and milk, soy, rice, grains and seed drinks, juice, nectar, still drinks, energy drinks, sport drinks, coffee or tea drinks, coconut water, wine, soups, jalapenos, tomatoes, sauce (such as pasta sauce), beans and olive oil are some nonlimiting example of food products contemplated.

The term "aseptic" in connection with a packaging material and packaging container refers to conditions where microorganisms are eliminated, in-activated or killed. Examples of microorganisms are bacteria and spores. Generally an aseptic process is used when a product is aseptically packed in a packaging container. For the continued asepticity during the shelf-life of the package, the package integrity properties are of course very important. For long-term shelf-life of a filled food product, it may furthermore be important that the package has barrier properties towards gases and vapours, such as towards oxygen gas, in order to keep the original taste and nutritional value of the packaged food product, such as for example its vitamin C content.

With the term "bulk layer" is normally meant the thickest layer or the layer containing the most material in a multilayer laminate, i.e. the layer which is contributing most to the mechanical properties and the dimensional stability of the laminate and of packaging containers folded from the laminate, such as paperboard or carton. It may also mean a layer providing a greater thickness distance in a sandwich structure, which further interacts with stabilising facing layers, which have a higher Young's modulus, on each side of the bulk layer, in order to achieve sufficient such mechanical properties and dimensional stability.

With the term "film" is meant a pre-manufactured film, which is in the state of a free-standing film further laminated to other material layers.

With the term "foil" is meant a metal foil, such as an aluminium foil.

In the following, preferred embodiments of the disclosure are described. The disclosure is not limited by the embodiments shown and described above, but may be varied within the scope of the claims.

### Low-voltage electron-beam sterilizable polyolefin film

The polyolefin film may comprise polyolefins such as polypropylene (PP) homo- co- and terpolymers, such as mono-oriented polypropylene (OPP), and biaxially oriented polypropylene (BOPP); polyethylene homo- and copolymers (PE), such as non-oriented high density polyethylene (HDPE), mono-oriented high density polyethylene (OHDPE), and biaxially oriented high density polyethylene (BOHDPE), medium density polyethylene (MDPE), oriented medium density polyethylene (OMDPE); low density polyethylene homo- and copolymers; linear low density polyethylene (LLDPE); or blends or mixtures of two or more of said polymers.

Specifically, the polymer film substrate may be a film selected from the group consisting of films based on mono-oriented polypropylene (OPP), biaxially oriented polypropylene (BOPP), mono-oriented high density polyethylene (OHDPE), and biaxially oriented high density polyethylene (BOHDPE).

More specifically, the polymer film substrate may be a film selected from the group consisting of films based on oriented polypropylene (OPP, BOPP).

The polyolefin film, such as a BOPP film, has a thickness of less than 40 µm, such as from 8 to 20 µm, such as from 10 to 15 µm. Preferably, the thickness of the polyolefin film is 10 to 20 µm, such as 12 to 18 µm, preferably 14 to 16 µm.

At higher thickness of the film substrate, the tearing and cutting properties of the laminated packaging material may be impaired because of the higher strength of the material. Oriented films usually exhibit an increased strength and toughness against tearing or cutting through the film, and when included in laminated packaging materials such films can cause difficulties in opening of a package. By selecting as thin as possible polymer films, the openability of a subsequently laminated packaging material will not be impaired, in comparison to laminated packaging materials in which the materials are more brittle (such as aluminium foil) and in which the polymer materials are entirely made by melt extrusion coating and melt extrusion lamination (such as an outer- or innermost layer of liquid-tight and heat-sealable low density polyethylene and or linear low density polyethylene).

The polyolefin film should be robust and cost efficient with good mechanical properties, to make it a suitable substrate for vapour deposition coating. The surface of the substrate film also needs to have high smoothness and good affinity to the vapour deposited coating.

The polyolefin film production process requires good melt processing stabilisation. Phosphite-based antioxidants are commonly used to provide good process stabilisation and are often used in combination with phenolic antioxidants. It has been found that these antioxidants give rise to aromatic breakdown products when the polyolefin film, or a laminate packaging material comprising such a polyolefin film, is sterilized using an electron-beam. Furthermore, it has been observed that these aromatic breakdown products can migrate through the material and reach a food product enclosed by or packaged in such a polyolefin film or a laminate packaging material comprising such a polyolefin film.

It has been found that by replacing the commonly used mixture of antioxidants with an antioxidant formulation comprising an N,N-dialkylhydroxylamine and a sterically hindered phenolic compound, the generation of aromatic breakdown products derived from the phosphite component can be reduced or completely avoided, while maintaining sufficient process stability.

Preferably, the N,N-dialkyl-hydroxylamine is chosen from the group consisting of N,N-dodecylhydroxylamine, N,N-ditetradecylhydroxylamine, N,N-dihexadecylhydroxylamine, N,N-dioctadecylhydroxylamine, N-hexadecyl-N-octadecylhydroxylamine, N-heptadecyl-N-octadecylhydroxylamine and derivatives thereof, and mixtures thereof. More preferably, the N,N-dialkylhydroxylamine is N,N-dihexadecylhydroxylamine, N,N-dioctadecylhydroxylamine or N-hexadecyl-N-octadecylhydroxylamine.

In specific embodiments, the amount of the N,N-dialkyl-hydroxylamine is from 100 to 1000 ppm, such as 150 to 900 ppm, preferably 200 to 800 ppm, such as from 250 to 700 ppm, such as from 300 to 600 ppm, such as from 350 to 500 ppm of the total polyolefin composition.

Preferably, the sterically hindered phenolic compound is selected from the group consisting of 2,6-di-tert-butyl-4-methylphenol, 2-tert-butyl-4,6-dimethylphenol, 2,6-di-tert-butyl-4-ethylphenol, 2,6-di-tert-butyl-4-n-butylphenol, 2,6-di-tert-butyl-4isobutylphenol, 2,6-dicyclopentyl-4-methylphenol, 2-(alphamethylcyclohexyl)-4,6-dimethylphenol, 2,6-di-octadecyl-4-methylphenol, 2,4,6,-tricyclohexyphenol, 2,6-di-tert-butyl- 4-methoxymethylphenol, pentaerythritol tetrakis(3-(3,5-di-tert-butyl-4-hydroxyphenyl)propionate, octadecyl-3-(3,5-di-tert-butyl-4-hydroxyphenyl)propionate, 1,3,5-trimethyl-2,4,6-tris(3,5-di-tert-butyl-4-hydroxybenzyl)benzene, and derivatives thereof, and mixtures thereof. More preferably, the sterically hindered phenolic compound is pentaerythritol tetrakis(3-(3,5-di-tert-butyl-4-hydroxyphenyl)propionate, octadecyl-3-(3,5-di-tert-butyl-4-hydroxyphenyl)propionate, 1,3,5-trimethyl-2,4,6-tris(3,5-di-tert-butyl-4-hydroxybenzyl)benzene, or a mixture thereof.

In specific embodiments, the amount of the sterically hindered phenolic compound is from 10 to 500 ppm, such as 50 to 400 ppm, preferably 100 to 300 ppm, such as 150 to 200 ppm.

Preferably, the weight ratio of N,N-hydroxylamine to sterically hindered phenolic compound is from 20:80 to 80:20, such as from 25:75 to 75:25, such as from 30:70 to 70:30, such as from 35:65 to 65:35, such as from 40:60 to 60:40, such as from 45:55 to 55:45, such as from 50:50; preferably from 60:40 to 70:30.

Preferred combinations of N,N-dialkyl-hydroxylamine(s) and sterically hindered phenolic compound(s) include (A) N,N-dioctadecylhydroxylamine and pentaerythritol tetrakis(3-(3,5-di-tert-butyl-4-hydroxyphenyl)propionate; (B) N,N-dioctadecylhydroxylamine, pentaerythritol tetrakis(3-(3,5-di-tert-butyl-4-hydroxyphenyl)propionate and octadecyl 3-(3,5-di-tert-butyl-4-hydroxyphenyl)-propionate; (C) N,N-dioctadecylhydroxylamine and 1,3,5-trimethyl-2,4,6-tris(3,5-di-tert-butyl-4-hydroxybenzyl)benzene; and (D) N,N-dioctadecylhydroxylamine, 1,3,5-trimethyl-2,4,6-tris(3,5-di-tert-butyl-4-hydroxybenzyl)benzene and octadecyl 3-(3,5-di-tert-butyl-4-hydroxyphenyl)propionate.

Thus, in one specific embodiment, the polyolefin is a BOPP- film with a thickness of 12 to 16 µm and comprising an antioxidant formulation comprising 350 to 500 ppm N,N-dihexadecylhydroxylamine, N,N-dioctadecylhydroxylamine or N-hexadecyl-N-octadecylhydroxylamine, preferably N-hexadecyl-N-octadecylhydroxylamine, and 150 to 200 ppm pentaerythritol tetrakis(3-(3,5-di-tert-butyl-4-hydroxyphenyl)propionate, octadecyl-3-(3,5-di-tert-butyl-4-hydroxyphenyl)propionate, or 1,3,5-trimethyl-2,4,6-tris(3,5-di-tert-butyl-4-hydroxybenzyl)benzene.

The low-voltage electron-beam sterilizable polyolefin film may further have a barrier coating on at least one side of the film.

The barrier coating may act as a barrier against gas, particularly against oxygen, but also against water vapour.

In some examples, the barrier coating acts as a water vapour barrier.

Over time, various vapour-deposition barrier coatings have been considered in designing packaging materials that fulfil the gas barrier criteria as well as the needs of various mechanical and other physical properties.

Vapour-deposited barrier layers may be applied by means of physical vapour deposition (PVD) or chemical vapour deposition (CVD) onto a substrate surface of a film material.

Thin vapour-deposited layers are normally merely nanometer-thick, i.e. have a thickness in the order of magnitude of nanometers, for example of from 1 to 500 nm (50 to 5000 Å), preferably from 1 to 200 nm, more preferably from 1 to 100 nm and most preferably from 1 to 50 nm.

One common type of vapour-deposition coating, often having some barrier properties, in particular water vapour barrier properties, are so called metallisation coatings, e.g. aluminium metal physical vapour deposition (PVD) coatings.

Such a PVD vapour-deposited layer, which is essentially continuous, substantially consisting of aluminium metal may have a thickness of from 5 to 50 nm, which corresponds to less than 1 % of the aluminium metal material present in an aluminium foil of conventional thickness for packaging, i.e. 6.3 µm. While vapour-deposition metal coatings require significantly less metal material, they only provide a low level of oxygen barrier properties, at most, and need to be combined with a further gas barrier material in order to provide a final laminated material with sufficient barrier properties. On the other hand, it may complement a further gas barrier layer, which does not have water vapour barrier properties, but which is rather sensitive to moisture.

Other examples of vapour-deposition coatings are aluminium oxide (AlOx, Al₂O₃) and silicon oxide (SiOx, SiO, SiO₂) coatings. Generally, such PVD-coatings are more brittle and less suitable for incorporation into packaging materials by lamination, while metallised layers as an exception do have suitable mechanical properties for lamination material despite being made by PVD.

Other coatings may be applied by means of a plasma enhanced chemical vapour deposition method (PECVD), wherein a vapour of a compound is deposited onto the substrate under more or less oxidising circumstances. Silicon oxide coatings (SiOx) may, for example, also be applied by a PECVD process, and may then obtain very good barrier properties under certain coating conditions and gas recipes. Unfortunately, SiOx coatings show bad adhesion properties when laminated by melt extrusion lamination to polyolefins and other adjacent polymer layers. Special expensive adhesives or adhesive polymers are needed to reach sufficient adhesion in a packaging laminate of the type intended for liquid carton packaging. Furthermore, the mechanical properties of PECVD SiOx-coated films, as with the other single-layer vapour deposition coatings, still may be improved to endure lamination and package forming better, since the coatings are very sensitive and thin in comparison to aluminium foil of several µm thickness. One type of silicon oxide coating, having both gas barrier and water vapour barrier properties also at higher humidity levels, as required in liquid packaging, as well as improved compatibility with adjacent layers in a multilayer structure, has the general composition formula SiOxCy, where in x is from 1.5 to 2.2 and y is from 0(i.e C is absent) to 0.8.

DLC defines a class of amorphous carbon material (diamond-like carbon) that displays some of the typical properties of diamond. Preferably, a hydrocarbon gas, such as e.g. acetylene or methane, is used as process gas in a plasma for producing a coating of amorphous hydrogenated carbon barrier layer applied by a PECVD vacuum process, i.e. a DLC. DLC coatings applied by PECVD under vacuum provide good adhesion to adjacent polymer or adhesive layers in a laminated packaging material. Particularly good adhesion to adjacent polymer layers, are obtained with polyolefins and in particular polyethylene and polyethylene-based co-polymers.

Most vapour deposition processes are carried out under vacuum, but e.g. atmospheric plasma coating processes may also provide barrier coatings.

Alternatively, a barrier coating may be applied by dispersion coating, such as preferably aqueous dispersion coating. Different substances may be used for such a barrier coating, preferably selected from the group consisting of ethylene vinyl alcohol (EVOH), polyvinyl alcohol (PVOH), starch, or derivatives thereof, nanocellulose (fibrillar or crystalline) and mixtures of two or more thereof.

The thin barrier coating layers further have the advantage of being recyclable, without leaving residues in the recycled content that would have a negative impact on downstream processes or reuse in high value applications.

The low-voltage electron-beam sterilizable polyolefin film may further have a layer of ethylene vinyl alcohol (EVOH) or polyvinyl alcohol (PVOH) on at least one side of the film. Preferably, the thickness of the layer of ethylene vinyl alcohol is 0.5 to 3 µm, such as 0.7 to 2.7 µm, preferably 0.9 to 2.5 µm, such as 1 to 2 µm. In certain applications, the thickness of the layer of ethylene vinyl alcohol is from 0.4 to 1.8 µm, such as 0.6 to 1.6 µm, such as 0.8 to 1.4 µm, such as 1 to 1.2 µm.

In certain cases, the EVOH or PVOH layer is arranged between the polyolefin layer and the barrier coating, as a coating-receiving layer having optimal surface properties for adhering well to the subsequently applied barrier coating, specifically for a vapour deposition coating type of barrier coating. When a layer of EVOH or PVOH is used as a coating-receiving layer, it is usually applied during the manufacturing of the film, as a coextruded layer or as a dispersion coating before the step of orienting or stretching the polyolefin film. In this way, the coating receiving layer may be thinned further, such that if forms like a thin "skin layer" and forms a surface layer of the polyolefin film,

The layer of EVOH may be applied by coextruding the polyolefin layer together with a flexible surface barrier layer of ethylene vinyl alcohol (EVOH) on a first side of the polyolefin layer.

The layer of EVOH may also be applied by dispersion coating. EVOH for dispersion coating have a low ethylene content, 10% or less and provide a higher oxygen barrier at lower thickness.

The way EVOH is applied influences the thickness of the EVOH layer. For instance, when coextruded it tends to be in the upper range, above 1 µm. When applied by dispersion coating on a bi-oriented film, e.g. a BOPP-film, an EVOH layer of 0.5 to 1 µm can be applied with excellent coverage.

Alternatively, a layer may be applied on the polyolefin layer by dispersion coating. Different substances may be used for such a layer, preferably selected from the group consisting of ethylene vinyl alcohol (EVOH), polyvinyl alcohol (PVOH), starch, or derivatives thereof, nanocellulose (fibrillar or crystalline) and mixtures of two or more thereof.

One type of such barrier films are so-called high surface energy films (HSE) for subsequent further barrier coating with ceramic, organic or metallic vapour deposition coatings, such as SiOx coatings or metallisation coatings as described above. The high surface energy of the film, mostly based on polypropylene or similar polyolefin films, is provided by a thin surface layer of e.g. ethylene vinyl alcohol or polyvinyl alcohol.

Preferably, the low-voltage electron-beam sterilizable polyolefin film comprises zeolite in an amount of less than 10 ppm, preferably less than 5 ppm, even more preferred less than 1 ppm, such as less than 0.1 ppm.

Preferably, the low-voltage electron-beam sterilizable polyolefin film comprises phosphite-based antioxidant in an amount of less than 100 ppm, preferably less than 50 ppm, even more preferred less than 10 ppm, such as less than 5 ppm, such as less than 1 ppm.

Preferably, the low-voltage electron-beam sterilizable polyolefin film comprises hindered amine light stabilizer in an amount of less than 10 ppm, preferably less than 5 ppm, even more preferred less than 1 ppm.

### Packaging material

In a second aspect of the disclosure, a low-voltage electron-beam sterilizable laminated packaging material comprising the low-voltage electron-beam sterilizable polyolefin film of the disclosure is provided. The laminated packaging material further comprises a first outermost liquid tight, heat sealable polyolefin layer and a second innermost liquid tight, heat sealable polyolefin layer.

The low-voltage electron-beam sterilizable laminated packaging material may further comprise a bulk layer of paper or paperboard or other cellulose-based material, arranged between the first outermost liquid-tight, heat sealable polyolefin layer and said low-voltage electron-beam sterilizable polyolefin film.

Thus, the low-voltage electron-beam sterilizable laminated packaging material may comprise a bulk layer of paper or paperboard, a first outermost liquid tight, heat sealable polyolefin layer, a second innermost liquid tight, heat sealable polyolefin layer and, arranged on the inner side of the bulk layer of paper or paperboard, towards the inside of a packaging container made from the packaging material, between the bulk layer and the innermost layer, the low-voltage electron-beam sterilizable polyolefin film as described above.

The low-voltage electron-beam sterilizable polyolefin film may be bonded to the bulk layer by an interjacent polymer or adhesive bonding layer, such as an intermediate adhesive, or thermoplastic polymer bonding layer, thus binding the surface of the vapour-deposited barrier coating of the low-voltage electron-beam sterilizable polyolefin film to the bulk layer.

The barrier coating may act as a barrier against gas, particularly against oxygen, but also against water vapour.

In some examples, the barrier acts as a water vapour barrier, especially when a gas barrier is present in another layer of the packaging material.

According to a special embodiment the bonding layer is a polyolefin layer, such as in particular a layer of a polyethylene-based polyolefin copolymer or blend, including in the majority ethylene monomer units. Preferably, the bonding layer is binding the bulk layer to the low-voltage electron-beam sterilizable polyolefin film by melt extrusion laminating the bonding polymer layer between a web of the bulk layer and a web of the film layer, and simultaneously pressing the three layers together while being forwarded through a lamination roller nip, thus providing a laminated structure, i.e. by so-called extrusion laminating the bulk layer to the low-voltage electron-beam sterilizable polyolefin film.

Suitable thermoplastics for the outermost and innermost heat sealable liquid-tight layers are polyolefins such as polyethylene and polypropylene homo- or co-polymers, preferably polyethylenes and more preferably polyethylenes selected from the group consisting of low density polyethylene (LDPE), linear LDPE (LLDPE), single site catalyst metallocene polyethylenes (m-LLDPE) and blends or copolymers thereof.

According to a preferred embodiment, the outermost heat sealable and liquid-tight layer is an LDPE, while the innermost heat sealable, liquid-tight layer is a blend composition of m-LLDPE and LDPE for optimal lamination and heat sealing properties.

The same thermoplastic polyolefin-based materials, as listed regarding the outermost and innermost layers, and in particular polyethylenes, are also suitable in bonding layers interior of the laminated material, i.e. between a bulk or core layer, such as paper or paperboard, and the low-voltage electron-beam sterilizable polyolefin film.

In an embodiment, the thermoplastic bonding layer may be a polyethylene layer, such as a low density polyethylene (LDPE) layer.

According to an alternative embodiment, suitable bonding or tie layers interior of the laminated material, such as for example between the bulk or core layer and the low-voltage electron-beam sterilizable polyolefin film, or between the outer heat sealable layer and the barrier-coated low-voltage electron-beam sterilizable polyolefin film, are also so-called adhesive thermoplastic polymers, such as modified polyolefins, which are mostly based on LDPE or LLDPE copolymers or, graft co-polymers with functional-group containing monomer units, such as carboxylic or glycidyl functional groups, e.g. (meth)acrylic acid monomers or maleic anhydride (MAH) monomers, (i.e. ethylene acrylic acid copolymer (EAA) or ethylene methacrylic acid copolymer (EMAA)), ethyleneglycidyl(meth)acrylate copolymer (EG(M)A) or MAH-grafted polyethylene (MAH-g-PE). Another example of such modified polymers or adhesive polymers are so called ionomers or ionomer polymers. Preferably, the modified polyolefin is an ethylene acrylic acid copolymer (EAA) or an ethylene methacrylic acid copolymer (EMAA).

Corresponding modified polypropylene-based thermoplastic adhesives or bonding layers may also be useful, depending on the requirements of the finished packaging containers.

Such adhesive polymer layers or tie layers are applied together with the respective outer layer in a co-extrusion coating operation.

The interior bonding polymer layer may be coated directly onto the low-voltage electron-beam sterilizable polyolefin film having a barrier coating thereon. This can be achieved by using common techniques and machines, e.g. those known for the lamination of an aluminium foil, in particular hot lamination (extrusion) of the polymer layer from a molten polymer. Also, using a pre-made polymer film and binding it directly to the barrier-coated low-voltage electron-beam sterilizable polyolefin film by locally melting it, e.g. by applying heat with a hot cylinder or heated roller, is possible.

### Packaging container

In a third aspect of the disclosure there is provided a packaging container comprising the laminated packaging material of the disclosure, intended for packaging of liquid, semi-solid or wet food.

According to an embodiment, the packaging container is manufactured from the laminated packaging material of the disclosure, and according to a further embodiment it is in its entirety made of the laminated packaging material.

The packaging container may be formed from the laminated packaging material partly sealed, filled with liquid or semi-liquid food and subsequently sealed, by sealing of the packaging material to itself, optionally in combination with a plastic opening or top part of the package.

### Use

In a fourth aspect of the disclosure, there is provided a use of the low-voltage electron-beam resistant laminated packaging material according to the present disclosure in a method of forming, filling and sealing packaging containers for liquid food products in a filling machine, comprising the step of sterilizing at least the inside surface of the laminated packaging material by exposing it to low-voltage electron-beam irradiation.

From the above it is apparent that the low-voltage electron-beam sterilizable polyolefin film can be handled in a similar way to an aluminium foil barrier in the lamination and conversion methods into a laminated packaging material.

From the description above follows that, although various embodiments of the disclosure have been described and shown, the disclosure is not restricted thereto, but may also be embodied in other ways within the scope of the subject-matter defined in the following claims.

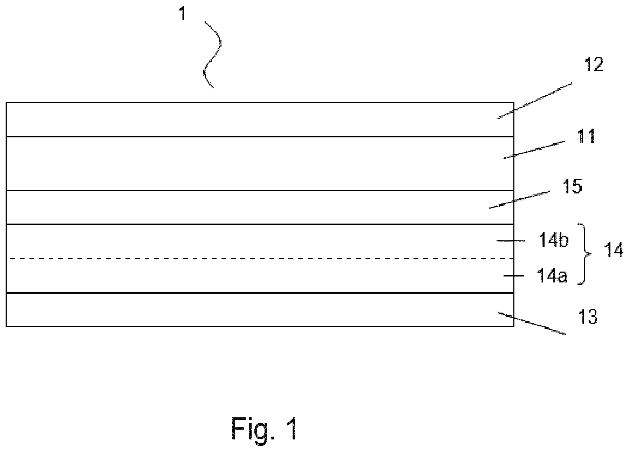

In Fig. 1, a laminated packaging material 1 of the disclosure, for liquid carton packaging, is shown, in which the laminated material comprises a paperboard bulk layer 11 of paperboard, having a bending force of 80 mN, and further comprises an outer liquid tight and heat sealable layer 12 of polyolefin applied on the outside of the bulk layer 11, which side is to be directed towards the outside of a packaging container produced from the packaging laminate.

The polyolefin of the outer layer 12 is a conventional low density polyethylene (LDPE) of a heat sealable quality, but may include further similar polymers, including LLDPEs.

An innermost liquid tight and heat sealable layer 13 is arranged on the opposite side of the bulk layer 11. The innermost liquid tight and heat sealable layer 13 is to be directed towards the inside of a packaging container produced from the packaging laminate, i.e. the layer 13 will be in direct contact with the packaged product. The innermost heat sealable layer 13, which is to form the strongest seals of a liquid packaging container made from the laminated packaging material, comprises one or more in combination of polyethylenes selected from the groups consisting of LDPE, linear low density polyethylene (LLDPE), and LLDPE produced by polymerising an ethylene monomer with a C4-C8, more preferably a C6-C8, alpha-olefin alkylene monomer in the presence of a metallocene catalyst, i.e. a so called metallocene - LLDPE (m-LLDPE).

The bulk layer 11 is laminated to a low-voltage electron-beam sterilizable polyolefin film 14 according to the present disclosure, comprising a polymer film substrate 14a, preferably BOPP, which is coated on a first side with a barrier coating layer 14b, preferably a vapour-deposited barrier coating as described above.

The first side of the polymer film substrate 14a is laminated to the bulk layer 11 by an intermediate layer 15 of bonding thermoplastic polymer or by a functionalised polyolefin-based adhesive polymer, in this example by a low density polyethylene (LDPE). The intermediate bonding layer 15 is formed by means of extrusion laminating the bulk layer and the durable barrier film to each other. The thickness of the intermediate bonding layer 15 is preferably from 7 to 20 µm, more preferably from 12-18 µm.

The innermost heat sealable layer 13 may consist of two or several partlayers of the same or different kinds of LDPE or LLDPE or blends thereof.

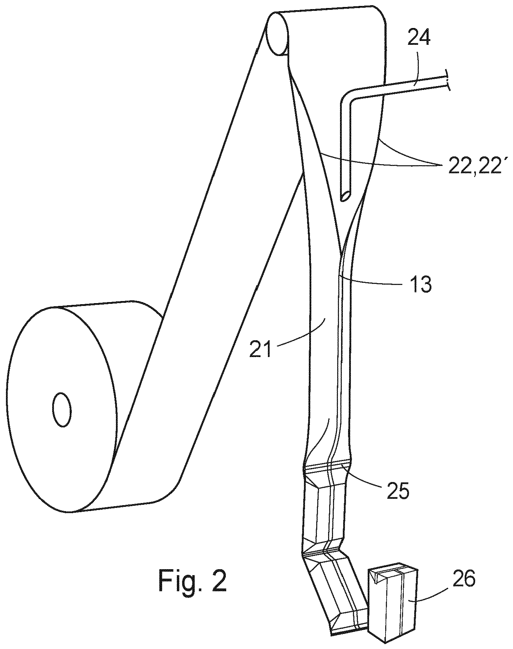

Fig. 2 shows the principle as described in the introduction of the present application, i.e. a web of packaging material is formed into a tube 21 by the longitudinal edges 22 of the web being united to one another in an overlap joint 23. The tube is filled 24 with the intended liquid food product and is divided into individual packages by repeated transversal seals 25 of the tube at a predetermined distance from one another below the level of the filled contents in the tube. The packages 26 are separated by incisions in the transversal seals and are given the desired geometric configuration by fold formation along prepared crease lines in the material.

### Experiment

Pilot scale polypropylene films were produced from polymer compositions having the same polymer constituents but having different antioxidant levels.

The film thickness was around 60 µm of all the sample films.

The film variants were produced with the differing antioxidant content as represented in Table 1.

**Table 1. Film variants**

| Variant | Primary hydroxylamine antioxidant (Irgastab FS042) (ppm) | | Secondary hindered phenol antioxidant (Irganox 1010) (ppm) | |
|---|---|---|---|---|
| 1 | | 500 | | 0 |
| 2 | | 250 | | 0 |
| 3 | | 250 | | 150 |
| 4 | | 0 | | 150 |

The films were laminated into a full packaging laminate multilayer structure in a pilot lamination line. The resulting packaging material had the following structure (gsm = grams per m²):
//12 gsm LDPE/ 80 mN LPB/ 20 gsm LDPE/ polypropylene sample film/ 25 gsm LLDPE//
wherein LPB is a conventional liquid paperboard as used for liquid carton packaging.

The packaging material thus produced from the variants of the films 1-5 were subsequently exposed to low voltage electron beam (LVEB) irradiation in a test rig under standardized conditions on both sides of the packaging material.

Packaging material test samples were subsequently prepared from the variants 1-4 (corresponding to the film variants 1-4) and assembled into migration test cells, such that the inside of the packaging material was oriented towards the inside of the test cell. Selected simulants of food, such as 95% ethanol, were filled into the cells. The filled test cells were then placed in an oven and stored at 60 degrees Celsius for 10 days, in order to accelerate migration of any degradation substances (migrants) from the antioxidants contained in the polypropylene films.

After completed accelerated migration, i.e. after 10 days, the cells were removed from the oven. The respective liquid food simulant now potentially containing dissolved migrants (such as potential breakdown products), was removed from each respective cell.

The respective food simulants were concentrated by evaporation.

Each concentrate sample solution was analysed by performing high sensitivity analysis by Gas or Liquid Chromatography and Mass spectrometry (GC/MS or LC/MS).

Relevant substances were identified, and quantified as compared to internal standards, i.e. the type of chemical substances were recognized and quantified vs calibration curves.

### Analysis

The packaging material samples were thus assembled into migration cells for single side contact similar in design to cell type F as described in CEN 13130-1:2004, with the food contact side of the packaging material oriented toward the inside simulant side of the cell. A total food contact surface of 0,5 dm² was brought in contact with 15 mL of 95% ethanol. The cells were stored for 10 days, at 60 °C.

The migration conditions of 10 days 60°C were chosen to simulate long term storage of liquid foods at ambient temperatures. 95% ethanol was chosen as a suitable food simulant, since it results in migration from the packaging material structure which is at least as severe as migration which could occur into liquid foodstuffs, or into the standard simulants for liquid foodstuffs.

The migrates from 2 cells were then combined, and spiked with 100 µL of an internal standard solution. The food simulant was then evaporated until the volume of the migrate was reduced to 1 ml. Screening of the extracts was performed by gas chromatography/ mass spectrometry (injection 1 µL, splitless, DB5ms 30mx0.25mm, 0.25 µm film, MSD 5975N).

The chromatograph separates the chemical components present in the migrate, and exhibits separate peaks at specific retention times for different chemical components. These peaks can in many cases be identified by their chemical structure as elucidated by Mass Spectrometry. Peaks can also be identified by their retention times in chromatograms, provided that the chromatograms are obtained according to the same analytical method.

Peak identification by means of retention time may be useful when the exact structures of the chemical components have not yet been fully elucidated. The areas of the peaks correlate to the concentration of the separated substances which were present in the sample of the migrate injected onto the chromatograph.

Individual peaks with specific retention times resulting from migration of LVEB irradiated packaging material were compared to peaks from migration of packaging material which had not been treated by LVEB. The appearance of a new peak after irradiation indicates that a new substance is formed after the irradiation. The type and quantity of these non-intentionally added substances (NIAS) depend on the antioxidant formulation which is used.

The aim of the present formulation development is to minimise concentrations of the breakdown products which migrate from the irradiated packaging material. If breakdown substances are present at relevant concentrations, they must be assessed as safe in accordance with internationally recognised scientific principles on risk assessment, before they can be used in a food contact application.

### Results

The migration of breakdown products after sterilisation with LVEB is compared for the four sets of packaging samples containing films with different antioxidant formulations in Table 1. Two packaging material samples were prepared using films containing different levels of hydroxylamine (500 or 250 mg/kg film) as the sole antioxidant stabiliser. The third stabilisation formulation combined hydroxylamine and a hindered phenolic antioxidant. The film in the packaging structure thus contained FS 042 at 250 mg/kg film and Irganox 1010 at 150 mg/kg film.

As a comparative example, packaging material including a commercial film which contained Irgafos 168 was tested. The material in the comparative example is not suitable for use in a food contact application with LVEB sterilisation due to the significant levels of breakdown products.

It is observed from the results after LVEB irradiation treatment of the samples, as presented in Table 2, that the formulations containing hydroxylamine have the potential to generate 3 substances as breakdown products: 4-hydroxy-4-methylpentanone-2, and 2 additional substances which are referred to in the table as HA BD unknown 1 or 2.

Both samples formulated with hydroxylamine alone exhibited significant levels of the breakdown products after the LVEB sterilisation irradiation treatment, as did the comparative example packaging material.

However, the combination of hydroxylamine and the hindered phenol decreased the migration of breakdown products after the LVEB irradiation treatment to a level that was sufficiently low, such that it was not detected in the chromatograms.

When only a low level of a hindered phenol was used, as in the packaging material sample of film variant 4, no breakdown products were detectable. Such a formulation does not, however, provide sufficient stabilisation for a sensitive polymer like a polyolefin or polypropylene, in a demanding process like film manufacturing.

**Table 2**

| **Type of film formulation** | **1st formulation - Hydroxylamine 500 ppm** | | | **2nd formulation - Hydroxylamine 250 ppm** | | | **Hydroxylamine + Hindered phenol** | | | **4th formulation - Hindered phenol** | | | **Comparative Example** | | |
|---|---|---|---|---|---|---|---|---|---|---|---|---|---|---|---|
| **Packaging sample number** | **1** | **2** | | **3** | **4** | | **5** | **6** | | **7** | **8** | | **commercial film reference** | **commercial film reference** | |
| **LVEB sterilised** | **no** | **yes** | | **no** | **yes** | | **no** | **yes** | | **no** | **yes** | | **no** | **yes** | |
| **Hydroxylamine FS 042** | **500 ppm** | | | **250 ppm** | | | **250 ppm** | | | | | | **reference commercial film** | | |
| **Irganox 1010** | **--** | | | **--** | | | **150 ppm** | | | **150 ppm** | | | | | |
| | **Peak Area** | **Peak Area** | ***Ret. time*** | **Peak Area** | **Peak Area** | ***Ret. time*** | **Peak Area** | **Peak Area** | ***Ret. time*** | **Peak Area** | **Peak Area** | ***Ret. time*** | **Peak Area** | **Peak Area** | ***Ret. time*** |
| ***HA BD 4-Hydroxy-4-methylpentan*** | **n.d.** | **21 234 355** | ***4,425 min.*** | **n.d.** | **4 925 542** | ***4,426 min.*** | **n.d.** | **n.d.** | | **n.d.** | **n.d.** | | **n.d.** | **n.d.** | |
| ***HA BD unknown 1*** | **n.d.** | **79 468 156** | ***7,985 min.*** | **n.d.** | **18 069 153** | ***7,973 min.*** | **n.d.** | **n.d.** | | **n.d.** | **n.d.** | | **n.d.** | **n.d.** | |
| **1,3-Di-tert.-Butylbenzene** | **n.d.** | **n.d.** | | **n.d.** | | | **n.d.** | **n.d.** | | **n.d.** | **n.d.** | | **n.d.** | **36 066 967** | **9,650 *min.*** |
| ***HA BD unknown 2*** | **n.d.** | **70 812 143** | ***11,428 min.*** | **n.d.** | **7 088 506** | ***11,574 min.*** | **n.d.** | **n.d.** | | **n.d.** | **n.d.** | | **n.d.** | **n.d.** | |
| **2,6-Di-tert.-Butylbenzoquinone** | **n.d.** | **n.d.** | | **n.d.** | **n.d.** | | **n.d.** | **n.d.** | | **n.d.** | **n.d.** | | **3701 852** | **16306273** | ***12,508 min.*** |
| **2,4-Di-tert.-Butylphenol** | **n.d.** | **n.d.** | | **n.d.** | **n.d.** | | **n.d.** | **n.d.** | | **n.d.** | **n.d.** | | **5 409 893** | **131 577 929** | ***13,015 min.*** |
| **oxaspiro(4,5)deca-6,9-diene-2,8-dione** | **n.d.** | **n.d.** | | **n.d.** | **n.d.** | | **n.d.** | **n.d.** | | **n.d.** | **n.d.** | | **14 554 815** | **30 929 591** | ***17,486 min.*** |
| **"*n.d.*" = "*not detected*"** | | | | | | | | | | | | | | | |

## Claims

1. Low-voltage electron-beam sterilizable polyolefin film of a polyolefin composition, for use in laminated packaging materials for liquid food products, the polyolefin composition comprising one or more polyolefins, **characterized in that** the polyolefin composition further comprises an antioxidant formulation comprising an N,N-dialkyl-hydroxylamine and a sterically hindered phenolic compound.

2. Low-voltage electron-beam sterilizable polyolefin film as claimed in claim 1, wherein the amount of the N,N-dialkyl-hydroxylamine is from 100 to 1000 ppm, such as 150 to 900 ppm, preferably 200 to 800 ppm, such as from 250 to 700 ppm, such as from 300 to 600 ppm, such as from 350 to 500 ppm of the total polyolefin composition.

3. Low-voltage electron-beam sterilizable polyolefin film as claimed in any one of claims 1 or 2, wherein the N,N-dialkyl-hydroxylamine has the formula
R¹R²NOH,
wherein
R¹ is a C₆-C₅₀ alkyl, such as a C₈-C₄₀ alkyl, such as a C₁₀-C₃₀ alkyl, such as a C₁₂-C₂₆ alkyl, such as a C₁₄-C₂₄ alkyl, preferably a C₁₆-C₂₂ alkyl, such as an C₁₈-C₂₀ alkyl, and
R² is a C₆-C₅₀ alkyl, such as a C₈-C₄₀ alkyl, such as a C₁₀-C₃₀ alkyl, such as a C₁₂-C₂₆ alkyl, such as a C₁₄-C₂₄ alkyl, preferably a C₁₆-C₂₂ alkyl, such as an C₁₈-C₂₀ alkyl.

4. Low-voltage electron-beam sterilizable polyolefin film as claimed in any one of the preceding claims, wherein the N,N-dialkyl-hydroxylamine is chosen from the group consisting of N,N-dodecylhydroxylamine, N,N-ditetradecylhydroxylamine, N,N-dihexadecylhydroxylamine, N,N-dioctadecylhydroxylamine, N-hexadecyl-N-octadecylhydroxylamine, N-heptadecyl-N-octadecylhydroxylamine and derivatives thereof, and mixtures thereof, preferably wherein the N,N-dialkyl-hydroxylamine is N,N-dihexadecylhydroxylamine, N,N-dioctadecylhydroxylamine or N-hexadecyl-N-octadecylhydroxylamine.

5. Low-voltage electron-beam sterilizable polyolefin film as claimed in any one of the preceding claims, wherein the amount of the sterically hindered phenolic compound is from 10 to 500 ppm, such as 50 to 400 ppm, preferably 100 to 300 ppm, such as 150 to 200 ppm.

6. Low-voltage electron-beam sterilizable polyolefin film as claimed in any one of the preceding claims, wherein the sterically hindered phenolic compound is selected from the group consisting of
2,6-di-tert-butyl-4-methylphenol,
2-tert-butyl-4,6-dimethylphenol,
2,6-di-tert-butyl-4-ethylphenol,
2,6-di-tert-butyl-4-n-butylphenol,
2,6-di-tert-butyl-4isobutylphenol,
2,6-dicyclopentyl-4-methylphenol,
2-(alpha-methylcyclohexyl)-4,6-dimethylphenol,
2,6-di-octadecyl-4-methylphenol,
2,4,6,-tricyclohexyphenol,
2,6-di-tert-butyl- 4-methoxymethylphenol,
pentaerythritol tetrakis(3-(3,5-di-tert-butyl-4-hydroxyphenyl)propionate,
octadecyl-3-(3,5-di-tert-butyl-4-hydroxyphenyl)propionate,
1,3,5-trimethyl-2,4,6-tris(3,5-di-tert-butyl-4-hydroxybenzyl)benzene,
and derivatives thereof, and mixtures thereof,
more preferably wherein the sterically hindered phenolic compound is
pentaerythritol tetrakis(3-(3,5-di-tert-butyl-4-hydroxyphenyl)propionate,
octadecyl-3-(3,5-di-tert-butyl-4-hydroxyphenyl)propionate,
1,3,5-trimethyl-2,4,6-tris(3,5-di-tert-butyl-4-hydroxybenzyl)-benzene,
or a mixture thereof.

7. Low-voltage electron-beam sterilizable polyolefin film as claimed in any one of the preceding claims, wherein the weight ratio of N,N-hydroxylamine to sterically hindered phenolic compound is from 20:80 to 80:20, such as from 25:75 to 75:25, such as from 30:70 to 70:30, such as from 35:65 to 65:35, such as from 40:60 to 60:40, such as from 45:55 to 55:45, such as from 50:50; preferably from 60:40 to 70:30.

8. Low-voltage electron-beam sterilizable polyolefin film as claimed in any one of the preceding claims, wherein the antioxidant formulation comprises at least two N,N-dialkyl-hydroxylamine and/or at least two sterically hindered phenolic compounds.

9. Low-voltage electron-beam sterilizable polyolefin film as claimed in any one of the preceding claims, wherein the polyolefin composition comprises one or more polyolefins selected from the group consisting of polypropylene homo-, co- and terpolymers, such as mono-oriented polypropylene (OPP) or biaxially-oriented polypropylene (BOPP); high density polyethylene homo- and copolymers, such as mono-oriented high density polyethylene (OHDPE) and biaxially oriented high density polyethylene (BOHDPE); medium density polyethylene homo- and copolymers, such as oriented medium density polyethylene (OMDPE); low density polyethylene homo- and copolymers; and linear low-density polyethylenes (LLDPEs); such as Ziegler-Natta catalysed linear low-density polyethylenes (ZN-LLDPE) or metallocene-catalysed linear low-density polyethylenes (m-LLDPE), or mixtures of any of said polyolefins.; preferably wherein the polyolefin is oriented polypropylene (OPP) or biaxially-oriented polypropylene (BOPP).

10. Low-voltage electron-beam sterilizable polyolefin film as claimed in any one of the preceding claims, wherein the thickness of the polyolefin film is 10 to 40 µm, such as 11 to 30 µm, such as 12 to 25 µm, such as 13 to18 µm, preferably 14 to 16 µm.

11. Low-voltage electron-beam sterilizable polyolefin film as claimed in any one of the preceding claims, further having a vapour-deposited barrier coating on at least one side of the film.

12. Low-voltage electron-beam sterilizable polyolefin film as claimed in claim 11, wherein the vapour-deposited barrier coating is a gas barrier coating selected from the group consisting of a metallized coating, metal oxide, inorganic oxide and diamond-like carbon coatings, preferably wherein the thickness of the vapour-deposited barrier coating is from 5 to 500 nm, such as from 5 to 100 nm, such as from 5 to 50 nm.

13. Low-voltage electron-beam sterilizable polyolefin film as claimed in any one of the preceding claims, further having a layer of ethylene vinyl alcohol on at least one side of the film, preferably wherein the thickness of the layer of ethylene vinyl alcohol is 0.5 to 3 µm, such as 0.7 to 2.7 µm, preferably 0.9 to 2.5 µm, such as 1 to 2 µm.

14. Low-voltage electron-beam sterilizable polyolefin film as claimed in any one of the preceding claims, comprising zeolite in an amount of less than 10 ppm, preferably less than 5 ppm, even more preferred less than 1 ppm, such as less than 0.1 ppm; phosphite-based antioxidant in an amount of less than 100 ppm, preferably less than 50 ppm, even more preferred less than 10 ppm, such as less than 5 ppm, such as less than 1 ppm; and hindered amine light stabilizer in an amount of less than 10 ppm, preferably less than 5 ppm, even more preferred less than 1 ppm.

15. Low-voltage electron-beam sterilizable laminated packaging material for liquid food products, comprising a first outermost liquid-tight, heat sealable polyolefin layer; an interior film; and a second innermost liquid-tight, heat sealable polyolefin layer; wherein the interior film is arranged between said first outermost liquid-tight, heat sealable polyolefin layer and said a second innermost liquid-tight, heat sealable polyolefin layer; and **characterized in that** the first outermost liquid-tight, heat sealable polyolefin layer is a low-voltage electron-beam sterilisable polyolefin film as claimed in any one of claims 1-10 and/or the second innermost liquid-tight, heat sealable polyolefin layer is a low-voltage electron-beam sterilisable polyolefin film as claimed in any one of claims 1-10, and/or the interior film is a low-voltage electron-beam sterilisable polyolefin film as claimed in any one of claims 1-14.

16. Low-voltage electron-beam sterilizable laminated packaging material for liquid food products according to claim 15, wherein the interior film is a low-voltage electron-beam sterilisable polyolefin film as claimed in any one of claims 11-14.

17. Low-voltage electron-beam sterilizable laminated packaging material for liquid food products according to claim 15 or 16, further comprising a bulk layer of paper or paperboard or other cellulose-based material, arranged between the first outermost liquid-tight, heat sealable polyolefin layer and said interior film, and optionally further comprising a decor film arranged between the first outermost liquid-tight, heat sealable polyolefin layer and the bulk layer of paper or paperboard or other cellulose-based material.

18. Low-voltage electron-beam sterilizable laminated packaging material for liquid food products according to any one of claims 15-17, wherein the interior film is bonded to the bulk layer by an interjacent polymer or adhesive bonding layer.

19. Packaging container for liquid food products comprising the low-voltage electron-beam sterilizable laminated packaging material as defined in any one of claims 15-18.

20. Use of the low-voltage electron-beam resistant laminated packaging material according to any one of claims 15-19 in a method of forming, filling and sealing packaging containers for liquid food products in a filling machine, comprising the step of sterilizing at least the inside surface of the laminated packaging material by exposing it to low-voltage electron-beam irradiation.
